Europäisches Patentamt

European Patent Office

Office européen des brevets

(11) Veröffentlichungsnummer: **0 337 157**
**A1**

(12) **EUROPÄISCHE PATENTANMELDUNG**

(21) Anmeldenummer: 89104890.2

(22) Anmeldetag: 18.03.89

(51) Int. Cl.⁴: **B60N 3/08**

(30) Priorität: 02.04.88 DE 3811340

(43) Veröffentlichungstag der Anmeldung:
18.10.89 Patentblatt 89/42

(84) Benannte Vertragsstaaten:
FR GB SE

(71) Anmelder: **SIDLER GMBH & CO**
**Bismarckstrasse 72**
**D-7400 Tübingen(DE)**

(72) Erfinder: **Hornung, Siegfried, Dipl.-Ing.**
**Welfenweg 9**
**D-7410 Reutlingen 11(DE)**
Erfinder: **Zeeb, Gerhard, Dipl.-Ing.**
**Sonnenhalde 3**
**D-7402 Kirchentellinsfurt(DE)**
Erfinder: **Bahnmüller, Walter**
**Altenburgerstrasse 16**
**D-7402 Kirchentellinsfurt(DE)**

(74) Vertreter: **Patentanwälte Kohler - Schwindling**
**- Späth**
**Hohentwielstrasse 41**
**D-7000 Stuttgart 1(DE)**

(54) Einbau-Ascher für Kraftfahrzeuge.

(57) Die Erfindung bezieht sich auf einen Einbauaschenbecher für Kraftfahrzeuge mit einem am Fahrzeug angeordneten Gehäuse (1), in dem ein schubladenartiges Schubteil (2) in einer Führung aus- und einschiebbar geführt ist, wobei nach dem Lösen einer Verriegelung eine Feder das Schubteil (2) aus einer Ruhelage im Gehäuse (1) in eine aus dem Gehäuse (1) zum größten Teil ausgezogenen Betriebsposition herausschiebt, und mit einem im Schubteil (2) um eine zur Richtung der Verschiebung rechtwinkelige Achse (23) schwenkbaren Zigarettenanzünder (6). Sie besteht darin, daß die Schwenkbewegung des Zigarettenanzünders (6) von der Verschiebebewegung des Schubteiles (2) über mindestens einen Hebel (14) abgeleitet ist, von denen einer einerseits am Gehäuse (1) und andererseits an einem Halter (13) des Zigarettenanzünders (6) so angelenkt ist, daß er bei ausgezogenem Schubteil (2) etwa parallel zur Längsachse (24) des hochgeschwenkten Zigarettenanzünders (6) verläuft.

Fig. 2

## Einbau-Ascher für Kraftfahrzeuge

Die Erfindung bezieht sich auf einen Einbau-Aschenbecher für Kraftfahrzeuge mit einem am Fahrzeug anzuordnenden Gehäuse, in dem ein schubladenartiges Schubteil in einer Führung aus- und einschiebbar geführt ist, wobei nach dem Lösen einer Verriegelung eine Feder das Schubteil herausschiebt, und mit einem im Schubteil um eine zur Richtung der Verschiebung rechtwinklig verlaufende Achse schwenkbaren Zigarettenanzünder. Ascher dieser Art sollen so niedrig wie möglich gebaut werden, daher ist bei eingeschobenem Schubteil der Zigarettenanzünder heruntergeschwenkt, seine Längsachse verläuft etwa parallel zu der Ebene des Schubteils. Ist das Schubteil herausgezogen, so schwenkt der Zigarettenanzünder aus dem Schubteil soweit heraus, daß er über den oberen Rand des Schubteiles hinaussteht, seine Längsachse also im Winkel zu der Ebene des Schubteiles steht. Das Glühteil kann dann bequem mit der Hand erfaßt werden.

Bei einem durch das DE-GM 77 25 026 bekannten Ascher dieser Art wurde beim Herausziehen des Schubteiles der Zigarettenanzünder durch eine Feder hochgeschwenkt. Dabei kann es vorkommen, daß bei einem Druck auf den Zigarettenanzünder, beispielsweise wenn das herausnehmbare Glühteil wieder in die Fassung zurückgedrückt wird, sich der Ascher schließt und der Anwender sich den Finger einklemmt. Dieser Nachteil kann jedoch nicht dadurch behoben werden, daß die sich dem Einschieben des Schubteiles entgegenstellenden Widerstände, insbesondere aber die das Schubteil herausführende Feder, verstärkt werden. Denn selbstverständlich soll die Schließbewegung des Aschers so leicht wie möglich bewerkstelligt werden. Federrasten, die den Zigarettenanzünder in der ausgeschwenkten Stellung festhalten, sind deshalb ungeeignet, weil diese Rastvorrichtungen entweder durch eine zusätzliche Betätigung entrastet werden müssen oder aber die Entrastung durch das Einschieben des Schubteils erfolgt, was wiederum eine zusätzliche Kraft beim Einschieben des Schubteils erfordert.

Der Erfindung liegt daher die Aufgabe zugrunde, einen Ascher der genannten Art dahingehend auszubilden, daß bei einem Druck auf den Zigarettenanzünder keine Einschubbewegung des Schubteiles erfolgt, trotzdem aber bei einem Druck auf die Griffleiste des Schubteiles sich dieses leicht und im wesentlichen nur gegen die Kraft der das Schubteil nach außen bewegenden Feder in das Gehäuse zurückschieben läßt.

Diese Aufgabe wird gemäß der Erfindung dadurch gelöst, daß die Schwenkbewegung des Zigarettenanzünders von der Verschiebebewegung des Schubteiles über mindestens einen Hebel abgeleitet ist, von denen einer einerseits am Gehäuse und andererseits an einem Halter des Zigarettenanzünders so angelenkt ist, daß er bei ausgezogenem Schubteil etwa parallel zur Längsachse des hochgeschwenkten Zigarettenanzünders verläuft.

Die Erfindung hat den Vorteil, daß ein auf den Zigarettenanzünder etwa axial ausgeübter Druck, z.B. beim Einstecken des Glühteiles, von diesem Hebel aufgenommen wird, und zwar umso vollständiger, je genauer die Parallelität zwischen Hebellängsachse und der Richtung der Kraft ist, die durch den Druck auf den Zigarettenanzünder erzeugt wird. Bei Ausführungsformen der Erfindung verlaufen die Kraftrichtung und die Hebellängsachse gleichachsig. Aber auch bei anderen Ausführungsformen, bei denen eine solche Gleichachsigkeit nicht gegeben ist, sondern die Hebellängsachse einen Abstand von dem Kraftvektor zur des auf den Zigarettenanzünders ausgeübten Druck aufweist, kann höchstens noch ein Drehmoment auftreten, das aber von den Führungen des Schubteils im Gehäuse aufgenommen wird.

Die Lage des Hebels, seine Anlenkpunkte am Gehäuse einerseits und am Halter des Zigarettenanzünders andererseits, sowie seine Länge können bei Ausführungsformen der Erfindung unterschiedlich sein, sie hängen im wesentlichen von anderen vorgegebenen Konstruktionsnotwendigkeiten und der dadruch beeinflußten Kinematik der beweglichen Teile ab. Wenn bei einer Ausführungsform der Erfindung der vorgenannte Hebel nicht nur zur Verriegelung der Einschubbewegung bei Druck auf den Zigarettenanzünder dienen soll, sondern zusätzlich die Verschiebebewegung des Schubteils in eine Schwenkbewegung des Zigarettenanzünders umwandeln soll, so ist erforderlich, daß der Anlenkpunkt des Hebels am Halter des Zigarettenanzünders einen Abstand von der Schwenkachse des Halters in dem Einschubteil aufweist.

Dabei kann bei Ausführungsformen der Erfindung die Anordnung so gewählt sein, daß die Längsachse des Hebels bei ausgezogenem Schubteil in einem Abstand von der Längsachse des Zigarettenanzünders verläuft, der größer als der Halbmesser des Zigarettenanzünders ist.

Bei einer Ausführungsform der Erfindung verläuft die Schwenkachse des Zigarettenanzünders etwa durch seine Längsachse. Dadurch wird die Kinematik der beweglichen Teile verhältnismäßig einfach.

Bei Ausführungsformen der Erfindung verläuft in der ausgezogenen Stellung des Zigarettenanzünders die Verbindungslinie von seiner Schwenkachse im Schubteil zu der Anlenkachse des Hebel an dem Halter des Zigarettenanzünders etwa parallel zu der die Verschiebebewegung des Schubteiles führenden Führung. Dadurch läßt sich mit einer verhältnismäßig einfachen Konstruktion und einer einfachen Kinematik die Verriegelung der Verschiebebewegung bei Druck auf den Zigarettenanzünder verwirklichen.

Weitere vorteilhafte Ausführungsformen der Erfindung sind in den Unteransprüchen erwähnt und ergeben sich auch aus der Zeichnung. Die einzelnen Merkmale der Ansprüche können je für sich oder zu mehreren bei Ausführungsformen der Erfindung verwirklicht sein.

In der Zeichnung sind die zum Verständnis der Erfindung wesentlichen Teile einer Ausführungsform der Erfindung schematisch dargestellt. Es zeigen:

Fig. 1 Einen Schnitt entlang der Linie I - I der Fig. 3 bei in das Aschergehäuse eingeschobenem Schubteil;

Fig. 2 einen der Fig. 1 entsprechenden Schnitt bei aus dem Gehäuse ausgezogenem Schubteil;

Fig. 3. einen Schnitt nach der Linie III - III in Fig. 1;

Fig. 4 einen vergrößerten Ausschnitt aus der Fig. 3.

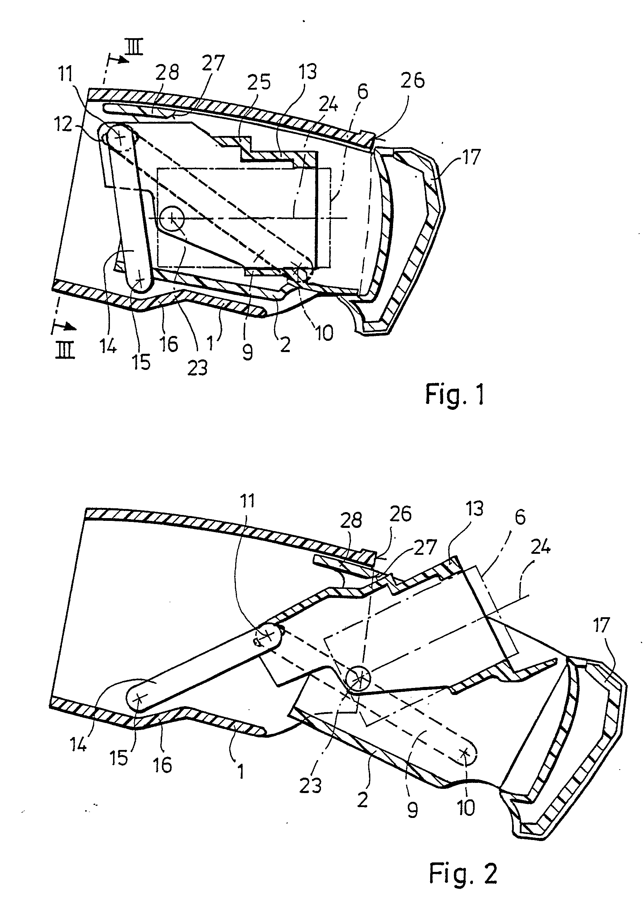

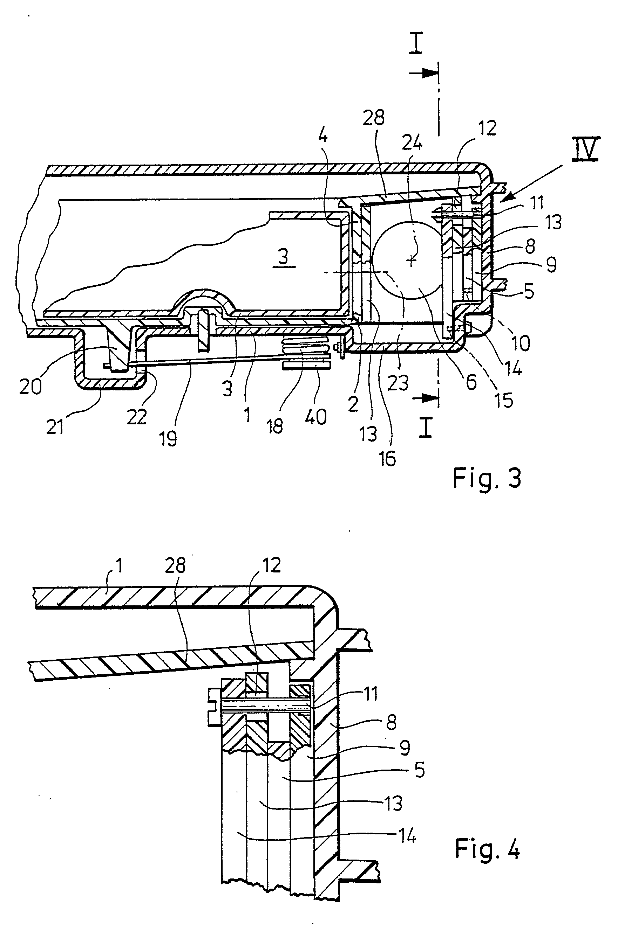

Bei der in der Zeichnung dargestellten Ausführungsform der Erfindung ist ein Aschergehäuse 1 vorgesehen, das im Armaturenbrett oder auf einer Konsole eines Kraftfahrzeuges mit nichtgezeichneten Befestigungsmitteln befestigt ist. In dem Aschergehäuse 1 ist ein Schubteil 2 in nicht dargestellten seitlichen Führungen von der in Fig. 1 dargestellten Stellung in die in Fig. 2 dargestellte Stellung verschiebbar geführt. In dem Schubteil 2 ist der eigentliche Aschenbehälter 3 in wiederum nicht gezeichneten Führungen so verschiebbar angeordnet, daß er aus dem Schubteil 2 ganz herausgeschoben werden kann, sobald eine Federraste gelöst wird, die den Aschenbehälter 3 in dem Schubteil 2 verschiebefest festhält. Der Aschebehälter 3 erstreckt sich in Fig. 3 von einer linken Seitenwand bis zu einer hochstehenden Wand 4 des Einschubteiles, die einen bis zur in Fig. 3 rechten Seitenwand 5 reichenden Raum abteilt, in dem in einem Halter 13 ein Zigarettenanzünder 6 angeordnet ist. Zwischen der Außenfläche der Seitenwand 5 des schubladenartigen Schubteiles 2 und der Innenfläche der benachbarten Gehäusewand 8 ist ein Zwischenraum vorgesehen, in dem ein Hebel 9 Platz findet, der an seinem unteren Ende mit einem Achsbolzen 10 an der Wand 5 des Schubteils 2 schwenkbar gelagert ist. Sein in Fig. 3 oberes Ende ist an einem Achsbolzen 11 angelenkt, der in der dargestellten Ausführungsform außerhalb der Seitenwand 5 sich befindet und durch ein Langloch 12 einer Seitenwand des Halters 6 hindurchgreift und an der Innenseite mit dem einen Ende eines Hebels 14 verbunden ist, dessen anderes Ende durch eine Schwenkachse 15 in einer Ausbuchtung 16 des Gehäuses 1 schwenkbar gelagert ist.

An der Stirnseite des in den Figuren 1 und 2 nicht dargestellten Aschebehälters 3 ist eine Grifleiste 17 befestigt, die in Fig. 3 nach rechts über den Aschebehälter 3 hinaussteht und auch das vordere Ende des Zwischenraumes zwischen der Wand 4 des Schubteiles 2 und der seitlichen Außenwand 8 des Gehäuses übergreift.

Auf einem an der Unterseite herausragenden Bolzen 40 des Gehäuses 1 ist eine Schenkelfeder 18 vorgesehen, deren Schenkel 19 an einem vom Schubteil 2 nach unten ragenden Vorsprung 20 anliegt. Das Gehäuse 1 weist hierzu eine zweite Ausbuchtung 21 auf, die an der Seite einen Längsschlitz 22 aufweist durch die der Federschenkel 19 in das Gehäuse zu dem Vorsprung 20 eintreten kann. Die Feder 18 ist so stark, daß sie nach dem Lösen einer zwischen dem Griff 17 und dem Gehäuse 1 wirkenden Rastverbindung das Schubteil 2 in die in Fig. 2 dargestellte Stellung schiebt, in der eine weitere Verschiebung durch einen nichtgezeichneten Anschlag unterbunden wird.

Der etwa zylinderförmige Zigarettenanzünder 6 ist in dem Halter 13 starr befestigt. Der Halter 13 ist um eine Achse 23 in den Wänden 4 und 5 des Schubteiles schwenkbar gelagert, die Achse 23 liegt etwa in der Symmetrieachse 24 des Zigarettenanzünders 6 (Fig. 2). Der Halter 13 mit dem Zigarettenanzünder 6 liegt, wie Fig. 1 zeigt, bei eingeschobenem Schubteil 2 etwa in Ebene des Schubteiles vollständig in das Schubteil 2 eingetaucht. Der Hebel 14 greift am in Fig. 1 linken oberen, nach hinten verlängerten Ende des Halters 13 gelenkig an, seine Höhe ist etwas größer als die Höhe des Innenraumes des Schubteiles 2, so daß er hinten und unten aus diesem Schubteil herausragt und in einer nach unten abstehenden Ausbuchtung des Gehäuses 1 um die Achse 15 schwenkbar gelagert ist. In der in Fig. 1 dargestellten Ruhestellung verläuft die Längsachse des Hebels 14 von hinten nach vorne und unten etwas gegen die lotrechte Lage geneigt.

Beim Herausziehen des Schubteils 2 schwenkt der Hebel 14 über seine Totpunktlage hinaus in die in Fig. 2 dargestellte Stellung, in der seine Längsachse etwa parallel zu der Längsachse 24 verläuft. In der in Fig. 2 dargestellten Endlage der Verschiebung hat der Hebel 14 den Halter 13 um die Achse 23 etwa um 45° nach oben verschwenkt, so daß das nichtgezeichnete Glühteil des Zigarettenanzünders 6 bequem mit der Hand zu greifen ist. Diese Schwenklage ist u.a. dadurch definiert, daß eine obere Wand 25 des Halters an der Stirnfläche 26 oder der vorderen Stirnseite 27 einer die Wände 4 und 5 des Schubteiles 2 verbindenden Leiste 28 zur Anlage kommt.

Bei dieser Bewegung kann sich der Schwenkbolzen 11, der an dem Hebel 14 befestigt ist, etwas in dem Langloch 12 des Halters 13 bewegen. Diese Bewegung innerhalb des Langloches wird durch den Hebel 9 geführt, dessen freies Ende ebenfalls am Schwenkbolzen 11 schwenkbar gelagert ist. Der Hebel 9 und das Langloch 12 dienen einer günstigeren Kinematik der Teile 9, 13, 14.

Bei Ausführungsformen der Erfindung können der Hebel 9 und das Langloch 12 auch fehlen, so daß das obere Ende des Hebels 14 ohne unzulässiges Spiel in einer Bohrung des Halters 13 gelagert ist.

Bei der in der Zeichnung dargestellten Ausführungsform der Erfindung hat die Schwenkachse 23 von der Schwenkachse 11 einen Abstand, der etwa dem Durchmesser des Zigarettenanzünders 6 entspricht. In der ausgezogenen Stellung 2 hat die Längsachse 24 von der Längsachse des Hebels 14 einen Abstand, der sich aus dem vorerwähnten Abstand der Schwenkpunkte und dem Sinus des Schwenkwinkels des Halters 13 ergibt.

Die Erfindung kann bei Aschern mit und ohne Dämpfungseinrichtung verwirklicht sein.

## Ansprüche

1. Einbauaschenbecher für Kraftfahrzeuge mit einem am Fahrzeug angeordneten Gehäuse (1), in dem ein schubladenartiges Schubteil (2) in einer Führung aus- und einschiebbar geführt ist, wobei nach dem Lösen einer Verriegelung eine Feder (18) das Schubteil (2) aus einer Ruhelage im Gehäuse (1) in eine aus dem Gehäuse (1) zum größten Teil ausgezogenen Betriebsposition herausschiebt, und mit einem im Schubteil (2) um eine zur Richtung der Verschiebung rechtwinkelige Achse (23) schwenkbaren Zigarettenanzünder (6), dadurch gekennzeichnet, daß die Schwenkbewegung des Zigarettenanzünders (6) von der Verschiebebewegung des Schubteiles (2) über mindestens einen Hebel (14) abgeleitet ist, von denen einer einerseits am Gehäuse (1) und andererseits an einem Halter (13) des Zigarettenanzünders (6) so angelenkt ist, daß er bei ausgezogenem Schubteil (2) etwa parallel zur Längsachse (24) des hochgeschwenkten Zigarettenanzünders (6) verläuft.

2. Vorrichtung nach Anspruch 1, dadurch gekennzeichnet, daß die Schwenkachse (23) des Zigarettenanzünders etwa durch seine Längsachse (24) verläuft.

3. Vorrichtung nach Anspruch 2, dadurch gekennzeichnet, daß die Längsachse des Hebels (14) bei ausgezogenem Schubteil (2) in einem Abstand von der Längsachse (24) des Zigarettenanzünders (6) verläuft, der größer als der Halbmesser des Zigarettenanzünders (6) ist.

4. Vorrichtung nach einem der vorgehenden Ansprüche, dadurch gekennzeichnet, daß in der ausgeschwenkten Stellung des Zigarettenanzünders (6) die Verbindungslinie von seiner Schwenkachse (23) im Schubteil (2) zu der Anlenkachse (11) des Hebels (14) an dem Halter (13) des Zigarettenanzünders (6) etwa parallel zu der der Verschiebbewegung des Schubteils (2) dienenden Führung verläuft.

5. Vorrichtung nach einem der vorhergehenden Ansprüche, dadurch gekennzeichnet, daß in dem Schubteil (2) ein Aschenbehälter (3) unabhängig vom Zigarettenanzünder (6) herausnehmbar angeordnet ist.

6. Vorrichtung nach einem der vorhergehenden Ansprüche, dadurch gekennzeichnet, daß der Zigarettenanzünder (6) zwischen einer Wand (4) und einer äußeren Seitenwand (6) des Einschubteiles (2) angeordnet ist.

7. Vorrichtung nach einem der vorhergehenden Ansprüche, dadurch gekennzeichnet, daß das halterseitige Ende des Hebels (14) in einem Langloch (12) des Halters (13) geführt ist.

8. Vorrichtung nach Anspruch 7, dadurch gekennzeichnet, daß das halterseitige Ende des Hebels (14) an einem Ende eines zweiten Hebels (9) angelenkt ist, dessen anderes Ende um eine Achse (10) am Schubteil angelenkt ist.

Fig. 1

Fig. 2

Fig. 3

Fig. 4

Europäisches
Patentamt

EUROPÄISCHER RECHERCHENBERICHT

Nummer der Anmeldung

EP 89 10 4890

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 433 992 (SIDLER) <br> * Seite 17, Zeile 8 - Seite 18, Zeile 19; Figur * <br> --- | 1,2,5,6 | B 60 N 3/08 |
| A | DE-B-1 196 526 (OBSTFELDER) <br> * Spalte 3, Zeilen 21-48; Figuren 4,5 * <br> --- | 1,2 | |
| A | DE-A-3 410 701 (BAYERISCHE) <br> * Seite 5, Zeile 31 - Seite 6, Zeile 31; Figur * <br> ----- | 1,5,6 | |

|  | RECHERCHIERTE SACHGEBIETE (Int. Cl.4) |
|---|---|
|  | A 24 F 19/00 <br> B 60 N 3/00 <br> F 23 Q 7/00 |

Der vorliegende Recherchenbericht wurde für alle Patentansprüche erstellt

| Recherchenort | Abschlußdatum der Recherche | Prüfer |
|---|---|---|
| DEN HAAG | 19-07-1989 | HORVATH R.C. |